**Europäisches Patentamt**

**European Patent Office**

**Office européen des brevets**

(19)

(11) Veröffentlichungsnummer: **0 167 951**
**B1**

(12) **EUROPÄISCHE PATENTSCHRIFT**

(45) Veröffentlichungstag der Patentschrift:
03.05.89

(51) Int. Cl.⁴: **H 04 M 7/00,** H 04 Q 3/00

(21) Anmeldenummer: 85108113.3

(22) Anmeldetag: 29.06.85

(54) Verfahren zur Wegesuche in einem vermaschten Fernmeldenetz.

(30) Priorität: 11.07.84 CH 3356/84

(43) Veröffentlichungstag der Anmeldung:
15.01.86 Patentblatt 86/3

(45) Bekanntmachung des Hinweises auf die Patenterteilung:
03.05.89 Patentblatt 89/18

(84) Benannte Vertragsstaaten:
AT BE CH DE FR GB IT LI NL

(56) Entgegenhaltungen:
FR-A- 2 075 017

**LOCAL NETWORKS AND DISTRIBUTED OFFICE
SYSTEMS, Band 1, Network Systems Development,
Online Publ. 1982, Seiten 83-99, Northwood, GB; S.S.
LAM: "Design considerations for large mobile packet
radio networks"**
**INTERNATIONAL DEFENCE REVIEW - 9 - MILITARY
ELECTRONICS, Band 3, 1976, Seiten 100-103, Genf, CH;
"Ptarmigan - A secure area communications system for
the British army"**
**SIXTH INTERNATIONAL CONFERENCE ON DIGITAL
SATELLITE COMMUNICATIONS, 19.-23. September
1983, Seiten VIII-14 - VIII-20, Phoenix, US; K. BRAYER:
"Adaptive networking of variable topology satellite
network"**

(73) Patentinhaber: **SIEMENS-ALBIS
AKTIENGESELLSCHAFT, EGA1/Verträge und Patente
Postfach, CH-8047 Zürich (CH)**

(72) Erfinder: **Hofmann, Mathias, Zwinglistrasse 39,
CH-8004 Zürich (CH)**
Erfinder: **Wyss, Albert, Uetlibergstrasse 240,
CH-8045 Zürich (CH)**

**Beschreibung**

Die vorliegende Erfindung betrifft ein Verfahren gemäss dem Oberbegriff des Patentanspruches 1.

Ein nach diesem Prinzip betriebenes Fernmeldenetz mit gruppenweise an die Vermittlungsstellen angeschlossenen Teilnehmerstellen ist aus der FR-A-2 075 017 bekannt. Für die Wegesuche in einem vermaschten Fernmeldenetz mit mobilen Teilnehmern, d.h. Teilnehmern, die die ihnen zugeordnete Vermittlungsstelle relativ häufig wechseln, sind grundsätzlich zwei Verfahren bekannt. Es sind dies das Verfahren nach dem Prinzip der «freien Zielsuche» und das der «Leitweglenkung», wie sie beispielsweise in der DE-OS 23 55 223 beschrieben sind.

Die Belastung in einem vermaschten Fernmeldenetz mit Wegesuche nach dem Leitwegverfahren nimmt proportional zur Netzdynamik zu. Sowohl die durch den Aufbau von Verbindungen herbeigeführte Belastung als auch die Verbindungsaufbauzeiten sind relativ klein. In einem Netz mit freier Zielsuche hingegen führen Veränderungen im Netz zu einer vergleichsweise geringeren Netzbelastung. Allerdings ist hier die Belastung durch den Aufbau von Verbindungen und die Verbindungsaufbauzeiten grösser als in einem Netz mit Leitweglenkung. In einem dynamischen Netz mit wenig Teilnehmern ist die freie Zielsuche das geeignete Wegesuchverfahren. Sobald eine bestimmte Teilnehmerzahl erreicht ist, ergeben sich jedoch dynamische Probleme.

Aufgabe der Erfindung ist es, ein Verfahren der eingangs genannten Art anzugeben, das eine optimale Suche freier Verbindungswege und eine bestmögliche Erreichbarkeit der Teilnehmer in einem vermaschten Fernmeldenetz mit einer grossen Anzahl von Teilnehmern und einer grossen Dynamik, d.h. mit vielen ihren Standort relativ häufig wechselnden Teilnehmern, gewährleistet. Die Lösung dieser Aufgabe gelingt mit einem Verfahren, wie es im Anspruch 1 gekennzeichnet ist.

Der Erfindung liegt der Grundgedanke zugrunde, ein «lernfähiges» Fernmeldenetz zu schaffen, indem die anschliessend an eine erfolglose Wegesuche nach dem Leitwegverfahren eingeleitete Wegesuche nach dem Verfahren der freien Zielsuche von der gerufenen Zielvermittlungsstelle dahingehend interpretiert wird, dass aufgrund der in den Vermittlungsstellen des Netzes eingespeicherten Informationen die Erreichbarkeit des gewünschten Teilnehmers mit Leitwegsuche nicht mehr gewährleistet ist und die Informationen daher aktualisiert werden müssen. Durch die in solchen Fällen erfindungsgemäss von der Zielvermittlungsstelle lawinenartig in das ganze Fernmeldenetz ausgesendete, die Gruppe der gerufenen Teilnehmerstelle kennzeichnende Meldung werden in den Vermittlungsstellen die den kürzesten Weg zu dieser Teilnehmerstelle beinhaltenden Informationen in einfacher Weise aktualisiert. Damit werden die Chancen für eine erfolgreiche Wegesuche nach dem Leitwegverfahren in einem Fernmeldenetz, die an sich zu bevorzugen ist, beträchtlich erhöht und eine Inanspruchnahme der Wegesuche nach dem Prinzip der freien Zielsuche mit ihrer relativ grossen Netzbelastung auf ein Minimum beschränkt. Vorteilhafte Weiterbildungen des vorgeschlagenen Verfahrens sind den Unteransprüchen zu entnehmen.

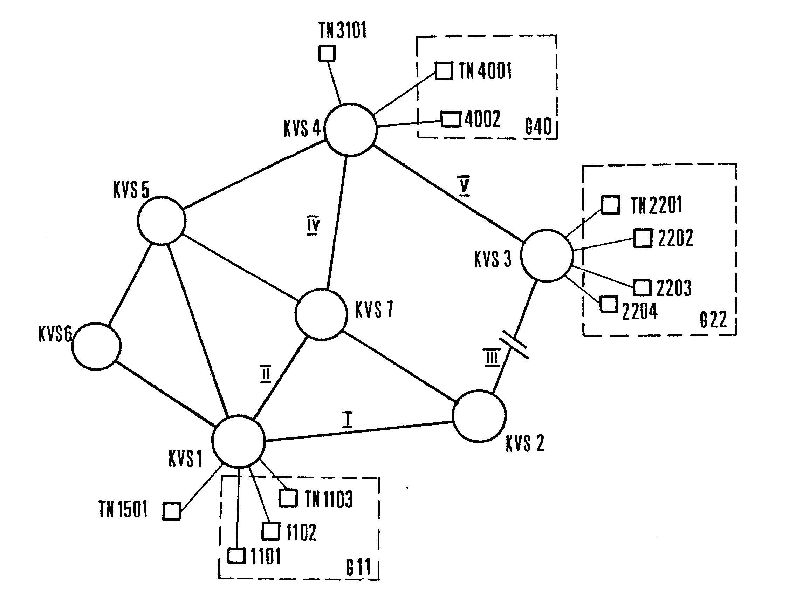

Die Erfindung wird nachfolgend anhand einer Zeichnung beispielsweise näher erläutert. Die Zeichnung zeigt einen Teil eines nichthierarchisch aufgebauten vermaschten Fernmeldenetzes mit einer Vielzahl von miteinander verbundenen Knotenvermittlungsstellen KVS. Die Teilnehmer TN sind gruppenweise über Knotenvermittlungsstellen KVS am Netz angeschlossen. An einer Vermittlungsstelle können mehrere Gruppen von Teilnehmern angeschlossen sein. Eine Teilnehmergruppe umfasst eine beliebige Anzahl mobiler Teilnehmer, die z.B. organisatorisch oder geografisch zusammengehören und daher ihren Standort, d.h. die ihnen zugeordnete Vermittlungsstelle, normalerweise nur gemeinsam wechseln. Die am Netz angeschlossenen Teilnehmergruppen sind fortlaufend numeriert. Die Teilnehmer einer Gruppe sind in der Regel an der gleichen Knotenvermittlungsstelle KVS angeschlossen. Beispielsweise sei an die Knotenvermittlungsstelle KVS1 eine Gruppe G11 mit den drei Teilnehmern TN1101, TN1102, TN1103 sowie eine einen einzigen Teilnehmer TN1501 enthaltende Gruppe G15 angeschlossen. An der Knotenvermittlungsstelle KVS3 sei die Gruppe G22 mit den vier Teilnehmern TN2201, TN2202, TN2203 und TN2204 angeschlossen. Ferner sei an der Knotenvermittlungsstelle KVS4 eine Teilnehmergruppe G40 mit den zwei Teilnehmern TN4001 und TN4002 sowie eine Gruppe G31 mit dem einzigen Teilnehmer TN3101 angeschlossen. In gleicher Weise können an den übrigen Vermittlungsstellen des Netzes weitere Teilnehmergruppen angeschlossen sein. Die erste und zweite Ziffer der Teilnehmernummer entsprechen im vorliegenden Beispiel der Nummer der Gruppe, der der Teilnehmer angehört. Die dritte und vierte Ziffer entsprechen der Rufnummer des Teilnehmers innerhalb der Gruppe.

Die einzelnen Knotenvermittlungsstellen KVS sind untereinander entweder direkt oder über andere Knotenvermittlungsstellen erreichbar. In jeder Knotenvermittlungsstelle ist eine Gruppenliste und eine Teilnehmerliste vorhanden, auf deren Inhalt direkt zugegriffen werden kann. In der Gruppenliste ist für jede im Fernmeldenetz vorhandene Teilnehmergruppe eine Information betreffend deren Erreichbarkeit eingetragen. Im einzelnen ist in dieser Liste eingetragen, ob die Gruppe überhaupt erreichbar ist und gegebenenfalls ob die Gruppe an der betreffenden oder an einer anderen Vermittlungsstelle angeschlossen ist. Ist die Gruppe an der betreffenden Vermittlungsstelle angeschlossen, enthält die Gruppenliste einen entsprechenden Verweis auf die Teilnehmerliste, aus der der betreffende Teilnehmeranschluss entnehmbar ist. Ist die gerufene Gruppe hingegen nicht an dieser Vermittlungsstelle angeschlossen, enthält die Gruppenliste eine Information, aus der hervorgeht, über welchen Verbindungsweg zu einer benachbarten Vermittlungsstelle die Gruppe am besten erreichbar ist.

Wird eine Teilnehmergruppe an eine Vermittlungsstelle angeschlossen, müssen sich deren Teilnehmer dort anmelden, indem ihre Teilnehmernummer in hier nicht weiter beschriebener Weise zur Vermittlungsstelle gelangt, wo die Rufnummer jedes Teilnehmers in der Teilnehmerliste und die Nummer der Gruppe, der er angehört, in die Gruppenliste eingetragen werden. Sobald eine Vermittlungsstelle einen Neuzugang einer Teilnehmergruppe verzeichnet, teilt sie dies sämtlichen anderen Vermittlungsstellen mit, indem sie eine Gruppenmeldung absetzt, die sich analog zum Prinzip der freien Zielsuche lawinenartig im ganzen Netz ausbreitet. Die Gruppenmeldung enthält lediglich die Nummer der betreffenden Gruppe und wird jeweils in der Gruppenliste aller Vermittlungsstellen eingetragen, wodurch dort die Informationen über die Erreichbarkeit der Gruppe aktualisiert werden. bei Inbetriebnahme einer neuen Verbindung wie auch bei Inbetriebnahme einer Vermittlungsstelle wird in gleicher Weise ebenfalls für jede angeschlossene Gruppe eine Gruppenmeldung an das Fernmeldenetz abgesetzt. Ferner wird jeweils eine Gruppenmeldung abgesetzt, wenn in einer Vermittlungsstelle eine Verbindungsanforderung nach dem Verfahren der freien Zielsuche eintrifft. Auf diesen Fall wird weiter unten noch näher eingegangen. Jede Vermittlungsstelle, die eine solche Gruppenmeldung empfängt, trägt in ihrer Gruppenliste jeweils den Verbindungsweg ein, auf dem sie die Gruppenmeldung zuerst erhalten hat, wie dies von der freien Zielsuche her bekannt ist. Allerdings werden dabei keine Verbindungswege reserviert. Die Übertragung der Gruppenmeldungen wie auch aller anderen Meldungen im Netz erfolgt über neben den Nutzinformationskanälen vorhandene Zeicheninformationskanäle.

Die Funktionsweise des gezeigten Fernmeldenetzes ist folgende:

Es sei angenommen, der Teilnehmer TN1101 an der Knotenvermittlungsstelle KVS1 wünsche eine Verbindung zum Teilnehmer TN2204 an der Knotenvermittlungsstelle KVS3. Des weiteren sei angenommen, dass die direkte Verbindung zwischen den Knotenvermittlungsstellen KVS2 und KVS3 kurz vorher ausgefallen sei und daher für einen Verbindungsaufbau nicht in Frage kommt. Der Teilnehmer TN1101 sendet die dem gewünschten Teilnehmer TN2204 entsprechende Wahlinformation aus, die in der Knotenvermittlungsstelle KVS1 empfangen wird. Aufgrund der Wahlinformation stellt die Knotenvermittlungsstelle KVS1 mit Hilfe ihrer Gruppenliste fest, dass die Gruppe des gewünschten Teilnehmers TN2204 nicht an ihr selbst angeschlossen ist. Wäre dies der Fall, würde die Verbindung zwischen den beiden Teilnehmern sofort hergestellt. Anhand der Gruppenliste in der Knotenvermittlungsstelle KVS1 wird auch festgestellt, dass als kürzeste Verbindung zum gewünschten Teilnehmer die Verbindung I zu wählen ist. In der Gruppenliste der Vermittlungsstellen ist für eine Gruppe jeweils ein möglicher Verbindungsweg eingetragen, der zum Zeitpunkt der letztmaligen Aktualisierung als der günstigste ermittelt wurde. Die Wahlinformation gelangt also über den Verbindungsweg I zur Knotenvermittlungsstelle KVS2, wo wiederum aus der Gruppenliste entnommen wird, dass der gewünschte Teilnehmer bzw. seine Gruppe nicht an dieser Vermittlungsstelle angeschlossen, jedoch über den abgehenden Verbindungsweg III erreichbar ist. Da nun gemäss Annahme der Verbindungsweg III nicht verfügbar ist, gelangt die Wahlinformation nicht zur Knotenvermittlungsstelle KVS3, was die Knotenvermittlungsstelle KVS2 veranlasst, die bisher aufgebaute Verbindung rückwärts bis zur Ursprungsvermittlungsstelle, der Knotenvermittlungsstelle KVS1 auszulösen. Die bisher beschriebene Wegesuche entspricht dem an sich bekannten Prinzip der Leitweglenkung.

Nachdem die Knotenvermittlungsstelle KVS1 ein Auslösen infolge Nichtzustandekommen der Verbindung festgestellt hat, leitet sie selbsttätig eine Wegesuche nach dem ebenfalls an sich bekannten Prinzip der freien Zielsuche ein. Sie schickt also eine lawinenartig sich im Netz ausbreitende, die Teilnehmernummer enthaltende Suchmeldung an alle Knotenvermittlungsstellen, wo festgestellt wird, ob die Gruppe des gewünschten Teilnehmers an dieser Knotenvermittlungsstelle bzw. an einer über diese erreichbare andere Knotenvermittlungsstelle angeschlossen ist. Wenn im vorliegenden Fall auf diese Weise die Suchmeldung die Zielvermittlungsstelle, d.h. die Knotenvermittlungsstelle KVS3 erreicht hat, wird parallel zur Rückmeldung eine Verbindung rückwärts über den Weg aufgebaut, den die vorstehend erwähnte Suchmeldung am schnellsten durchlaufen hat. Dies ist der kürzeste zur Zeit verfügbare Verbindungsweg, im vorliegenden Beispiel der Weg II-IV-V. Die dazugehörigen Wegabschnitte wurden zuvor aufgrund der in den Vermittlungsstellen zuerst eintreffenden Suchmeldungen reserviert und in den Vermittlungsstellen abgespeichert. Führt die Wegesuche auch nach diesem Vorgehen nicht zum Erfolg, wird die Gruppe G22 des gewünschten Teilnehmers TN2204 in der Gruppenliste der Ursprungsvermittlungsstelle KVS1 als nicht erreichbar gekennzeichnet und die Wegesuche abgebrochen. Dies ist u.a. dann der Fall, wenn die Gruppe vorübergehend oder überhaupt nicht am Fernmeldenetz angeschlossen oder wenn kein entsprechender Verbindungsweg im Netz verfügbar ist.

War die Wegesuche hingegen erfolgreich, kommt die gewünschte Verbindung in bekannter Art und Weise zustande. Aus dem Umstand, dass die Zielvermittlungsstelle, nämlich die Knotenvermittlungsstelle KVS3, die Suchmeldung für den Teilnehmer TN2204 nach dem Verfahren der freien Zielsuche erhalten hat, leitet sie ab, dass im Fernmeldenetz die Erreichbarkeit der an ihr angeschlossenen Teilnehmergruppe G22 als schlecht eingestuft wird. Aufgrund dessen sendet sie nach dem Zustandekommen der Verbindung eine die betreffende Gruppe kennzeichnende Meldung aus, die sich in Anlehnung an das Prinzip der freien Zielsuche ebenfalls lawinenartig über das ganze Fernmeldenetz ausbreitet und zu allen Vermittlungsstellen gelangt. Genau gleich wie bei der freien Zielsuche wird in den Vermittlungsstellen aus den aus verschiedenen Richtungen eintreffenden Gruppenmeldungen die schnellste erfasst und der entsprechende Verbindungsweg in der Gruppenliste eingetragen. Infolgedessen findet im ganzen Fernmeldenetz eine Optimierung bezüglich der Erreichbarkeit der betreffenden Teilnehmergruppe statt. Dadruch wird die Erfolgswahrscheinlichkeit für eine spätere Wegesuche zu einem Teilnehmer dieser Gruppe nach dem Prinzip der Leitweglenkung erhöht, welches Prinzip aus Gründen der geringeren Netzbelastung wenn immer möglich zu bevorzugen ist.

Grundsätzlich verläuft jede Wegesuche zwischen einer beliebigen Ursprungsvermittlungsstelle und einer beliebigen Zielvermittlungsstelle nach dem vorstehend beschriebenen Verfahren ab. In einer ersten Phase erfolgt die Wegesuche nach dem Prinzip der Leitweglenkung und falls diese erfolglos bleibt, wird in einer zweiten Phase eine Wegesuche nach dem Prinzip der freien Zielsuche durchgeführt. Letztere hat dann in der Zielvermittlungsstelle neben dem Aufbau der Verbindung das Aussenden der Gruppenmeldung in das Fernmeldenetz zur Folge, wodurch eine Aktualisierung desselben bezüglich Erreichbarkeit der Teilnehmergruppen bewirkt wird. Beim Aussenden einer Gruppenmeldung unterbleibt die Reservation von Verbindungswegen. Falls ein Teilnehmer einer in der Gruppenliste der Ursprungsvermittlungsstelle als nicht erreichbar gekennzeichneten Gruppe gerufen wird, wird anstelle der Wegesuche nach dem Prinzip der Leitweglenkung direkt eine Wegesuche nach dem Prinzip der freien Zielsuche eingeleitet, um zum vornherein eine unnötig lange Suchzeit zu vermeiden.

In einer Weiterbildung der Erfindung kann vorgesehen werden, dass im Falle einer Wegesuche nach dem Verfahren der freien Zielsuche grundsätzlich in jeder die Suchmeldung empfangenden Vermittlungsstelle der gesuchte Teilnehmer bzw. seine Gruppe als nicht erreichbar eingetragen werden. Ist er dann trotzdem erreichbar, werden die diesbezüglichen Informationen durch die anschliessend von der Zielvermittlungsstelle ausgesendete Gruppenmeldung wie beschrieben innerhalb kürzester Zeit wieder aktualisiert. Ist er hingegen tatsächlich nicht erreichbar, verfügen sämtliche Vermittlungsstellen des Netzes über die entsprechende Information.

Neben dem vorstehend erwähnten Fall, wo ganze Teilnehmergruppen vorübergehend oder überhaupt nicht erreichbar sind, ist auch der Fall denkbar, wo nur einzelne Teilnehmer einer Teilnehmergruppe nicht an der ihrer Gruppe zugeordneten Vermittlungsstelle, sondern an einer anderen Vermittlungsstelle des Fernmeldenetzes oder überhaupt nicht am Fernmeldenetz angeschlossen sind. Solche Teilnehmer werden im folgenden als Vagabunden bezeichnet. Verlässt ein Teilnehmer seine Teilnehmergruppe und damit die dieser Gruppe zugeordnete Vermittlungsstelle, hinterlässt er in der Vermittlungsstelle eine Meldung, aufgrund der er in der Teilnehmerliste als nicht angeschlossener Vagabund vermerkt wird. Beim Eintreffen an seinem neuen Standort muss der Vagabund sich bei der betreffenden Vermittlungsstelle anmelden, worauf er dort in der Teilnehmerliste als Vagabund einer fremden Teilnehmergruppe eingetragen wird. Die Nummer seiner Teilnehmergruppe wird in der Gruppenliste eingetragen.

Empfängt eine Vermittlungsstelle eine Leitwegsuchmeldung für einen Teilnehmer, der an sich einer an ihr angeschlossenen Teilnehmergruppe angehört, jedoch momentan als Vagabund gekennzeichnet ist, sendet die Vermittlungsstelle eine Meldung «Vagabund» zurück zur Ursprungsvermittlungsstelle und löst die Verbindung aus. Hierauf leitet die Ursprungsvermittlungsstelle eine «freie Zielsuche Vagabund» ein, aufgrund welcher jede Vermittlungsstelle neben ihrer Gruppenliste – wie übrigens bei jeder freien Zielsuche – auch die Vagabunden in ihrer Teilnehmerliste absucht. Da in der Vermittlungsstelle, der der gesuchte Teilnehmer eigentlich angehört, dieser als Vagabund vorgemerkt ist, reagiert diese Vermittlungsstelle nicht auf die Vagabunden-Suchmeldung. Sie leitet also keinen Verbindungsaufbau ein und sendet auch keine Gruppenmeldung aus. Hingegen reagiert die Vermittlungsstelle, in der der gesuchte Teilnehmer als angeschlossener Vagabund vermerkt ist, normal, indem sie eine Rückmeldung aussendet und gleichzeitig den Verbindungsaufbau rückwärts zur Ursprungsvermittlungsstelle einleitet. Wird der Vagabund auf diese Weise jedoch nicht gefunden, wird die Verbindungswegesuche abgebrochen.

**Patentansprüche**

1. Verfahren zur Ermittlung eines freien Verbindungsweges zwischen Teilnehmerstellen in einem Fernmeldenetz mit untereinander maschenförmig verbundenen Vermittlungsstellen, denen im Falle eines Anrufes jeweils ausgehend von einer Ursprungsvermittlungsstelle die gewünschte Teilnehmerstelle betreffende Informationen zugeführt werden, die mit entsprechenden Informationen der an diese Vermittlungsstellen angeschlossenen Teilnehmerstellen verglichen werden, wobei die Teilnehmer (TN) in Gruppen zusammengefasst und in der Regel gruppenweise an eine und dieselbe Vermittlungsstelle (KVS) angeschlossen sind, dadurch gekennzeichnet, dass im Falle eines Anrufes von der Ursprungsvermittlungsstelle aus durch Aussenden einer die Gruppe und die Rufnummer des betreffenden teilnehmers enthaltenden Information zunächst eine Wegesuche und ein Verbindungsaufbau nach dem Prinzip der Leitweglenkung veranlasst und im Falle eines erfolglosen Versuchs hierauf von der Ursprungsvermittlungsstelle aus durch Aussenden der gleichen Information eine Wegesuche und ein Verbindungsaufbau nach dem Prinzip der freien Zielsuche eingeleitet wird, und dass eine solche Zielsuchmeldung empfangende Zielvermittlungsstelle neben dem Aufbau einer Verbindung zur Ursprungsvermittlungsstelle gleichzeitig eine die Gruppe des betreffenden Teilnehmers (TN) kennzeichnende Gruppenmeldung aussendet, die zu allen Vermittlungsstellen gelangt und dort eine Regenerierung der die Erreichbarkeit der betreffenden Teilnehmergruppe kennzeichnenden Informationen bewirkt.

2. Verfahren nach Anspruch 1, dadurch gekennzeichnet, dass in jeder Vermittlungsstelle eine die Erreichbarkeit der Teilnehmergruppen des Netzes beinhaltende Gruppenliste sowie eine die Rufnummern der an die Vermittlungsstelle angeschlossenen Teilnehmerstellen beinhaltende Teilnehmerliste vorhanden sind, welche beiden Listen im Zuge einer Wegesuche durch direkten Zugriff abgefragt werden.

3. Verfahren nach Anspruch 2, dadurch gekennzeichnet, dass im Falle einer erfolglosen freien Zielsuche die betreffende Teilnehmergruppe in der Ursprungsvermittlungsstelle als nicht erreichbar eingetragen wird.

4. Verfahren nach Anspruch 3, dadurch gekennzeichnet, dass im Falle eines Anrufes einer in der Ursprungsvermittlungsstelle als nicht erreichbar eingetragenen Teilnehmerstelle direkt eine Wegesuche nach dem Prinzip der freien Zielsuche eingeleitet wird.

5. Verfahren nach Anspruch 4, dadurch gekennzeichnet, dass beim Empfang einer freien Zielsuchmeldung in jeder Vermittlungsstelle mit Ausnahme der Zielvermittlungsstelle die gewünschte Teilnehmergruppe als nicht erreichbar eingetragen wird.

6. Verfahren nach Anspruch 2, dadurch gekennzeichnet, dass jeweils beim Anschluss einer Teilnehmergruppe an eine Vermittlungsstelle (KVS) in deren Gruppenliste die Gruppennummer und in deren Teilnehmerliste die Rufnummern der dieser Gruppe angehörenden Teilnehmer (TN) eingetragen werden.

7. Verfahren nach Anspruch 6, dadurch gekennzeichnet, dass gleichzeitig mit dem Eintrag in die beiden Listen eine Gruppenmeldung lawinenartig an sämtliche übrigen Vermittlungsstellen (KVS) des Fernmeldenetzes abgegeben wird.

8. Verfahren nach Anspruch 7, dadurch gekennzeichnet, dass auch bei Inbetriebnahme einer Verbindung sowie bei Inbetriebnahme einer Vermittlungsstelle (KVS) für alle beteiligten Teilnehmergruppen eine Gruppenmeldung an sämtliche übrigen Vermittlungsstellen (KVS) abgegeben wird.

9. Verfahren nach Anspruch 2, dadurch gekennzeichnet, dass ein seine Gruppe verlassender Teilnehmer in der Teilnehmerliste der betreffenden Vermittlungsstelle (KVS) als Vagabund gekennzeichnet wird.

10. Verfahren nach Anspruch 9, dadurch gekennzeichnet, dass ein Vagabund beim Anschluss an eine nicht seiner Gruppe zugehörige Vermittlungsstelle dort in der Teilnehmerliste als erreichbarer Vagabund sowie in der Gruppenliste seine Gruppennummer eingetragen wird.

## Revendications

1. Procédé pour déterminer une voie de liaison libre entre des postes d'abonnés dans un réseau de télécommunications et des centraux reliés entre eux de façon maillée et auxquels sont envoyées dans le cas d'un appel émanant respectivement d'un central d'origine, des informations concernant le poste d'abonné désiré, qui sont comparées à des informations correspondantes des postes d'abonnés raccordés à ces centraux, les abonnés (TN) étant réunis par groupes et raccordés en général par groupes à un même central (KVS), caractérisé par le fait que dans le cas d'un appel provenant du central d'origine, une recherche de voies d'acheminement et l'établissement d'une liaison selon le principe de l'acheminement directionnel sont tout d'abord déclenchés par l'émission d'une information contenant le groupe et le numéro d'appel de l'abonné considéré, et, dans le cas d'une tentative n'ayant pas abouti, une recherche de voies d'acheminement et l'établissement d'une liaison selon le principe de la recherche libre de destinations sont alors déclenchés à partir du central d'origine au moyen de l'émission de la même information, et qu'en dehors de l'établissement d'une liaison avec le central d'origine, un central de destination recevant une telle signalisation de recherche de destinations émet simultanément une signalisation de groupe, qui caractérise le groupe de l'abonné (TN) considéré, parvient à tous les centraux et y déclenche une régénération des informations caractérisant l'accessibilité du groupe d'abonnés considéré.

2. Procédé suivant la revendication 1, caractérisé par le fait qu'il existe dans chaque central une liste des groupes incluant l'accessibilité des groupes d'abonnés du réseau, ainsi qu'une liste d'abonnés incluant les numéros d'appel des postes d'abonnés raccordés au central, ces deux listes étant interrogées au moyen d'un accès direct au cours d'une recherche de voies d'acheminement.

3. Procédé suivant la revendication 2, caractérisé par le fait que dans le cas d'une recherche libre de destinations sans succès, le groupe d'abonnés considéré est signalé comme n'étant pas accessible, dans le central d'origine.

4. Procédé suivant la revendication 3, caractérisé par le fait que dans le cas d'un appel d'un poste d'abonné signalé dans le central d'origine comme n'étant pas accessible, une recherche de voies d'acheminement est déclenchée directement conformément au principe de la recherche libre de destinations.

5. Procédé selon la revendication 4, caractérisé en ce que dans le cas de la réception d'une signalisation libre de recherche de destinations dans chaque central à l'exception du central de destination, le groupe d'abonnés désiré est marqué comme n'étant pas accessible.

6. Procédé suivant la revendication 2, caractérisé par le fait que lors du raccordement d'un poste d'abonné à un central (KVS), le numéro du groupe est marqué dans la liste des groupes de ce central et les numéros d'appel des abonnés (TN) appartenant à ce groupe sont marqués dans la liste d'abonnés de ce central.

7. Procédé suivant la revendication 6, caractérisé par le fait que simultanément, lors du marquage dans les deux listes, une signalisation de groupe est délivrée selon un mode en boule de neige à tous les autres centraux (KVS) du réseau de télécommunications.

8. Procédé suivant la revendication 7, caractérisé par le fait que, également lors de la mise en service d'une liaison, ainsi que lors de la mise en service d'un central (KVS), une signalisation de groupe est envoyée, pour tous les groupes d'abonnés participants, à tous les autres centraux (KVS).

9. Procédé suivant la revendication 2, caractérisé par le fait qu'un abonné quittant son groupe est caractérisé comme vagabond dans la liste d'abonnés du central (KVS) considéré.

10. Procédé suivant la revendication 9, caractérisé par le fait que lors du raccordement d'un vagabond à un central non associé à son groupe y est marqué dans la liste d'abonnés comme vagabond accessible et son numéro de groupe est inséré dans la liste des groupes.

**Claims**

1. A method of determining a free connection path between subcriber stations in a telecommunications network comprising switching centres which are connected to one another in meshed fashion and which, in the event of a call are in each case supplied from an originating switching centre with the information items which relate to the desired subscriber station and which are compared with corresponding information items of the subscriber stations connected to these switching centres, where the subscribers (TN) are combined in groups and are normally connected in groups to one and the same switching centre (KVS), characterised in that in the event of a call, by transmitting an information item which contains the group and subscriber number of the respective subscriber, the originating switching centre firstly initiates a path finding operation and connection establishment in accordance with the routing principle, and in the event of an unsuccessful attempt, by transmitting the same information, the originating switching centre then initiates a path finding operation and connection establishment in accordance with the principle of free target finding, and that a target switching centre which receives such a target search and message not only establishes a connection to the originating switching centre but simultaneously transmits a group message which characterises the group of the respective subscriber (TN) and which is supplied to all the switching centres in which it regenerates the information items which characterise the accessibility of the respective subscriber group.

2. A method as claimed in claim 1, characterised in that in each switching centre there is provided a group list which lists the accessibility of the subscriber groups of the network, and a subscriber list which lists the subscriber numbers of the subscriber stations connected to the switching centre where both lists are interrogated in the course of a path finding operation by direct access.

3. A method as claimed in claim 2, characterised in that in the event of an unsuccessful free target finding operation, the respective subscriber group is entered as non-accessible in the originating switching centre.

4. A method as claimed in claim 3, characterised in that in the event of a call to a subscriber station entered as non-accessible in the originating switching centre, a path finding operation in accordance with the principle of free target finding is initiated directly.

5. A method as claimed in claim 4, characterised in that when a free target search message is received, the desired subscriber group is entered as non-accessible in each switching centre with the exception of the target switching centre.

6. A method as claimed in claim 2, characterised in that whenever a subscriber group is connected to a switching centre (KVS) the group number is entered in its group list and the subscriber numbers of the subscribers (TN) which belong to this group are entered in its subscriber list.

7. A method as claimed in claim 6, characterised in that simultaneously to its entry in the two lists, a group message is emitted in avalanche fashion to all the other switching centres (KVS) of the telecommunications network.

8. A method as claimed in claim 7, characterised in that also at the start of a connection and at the start of operation of a switching centre (KVS), for all the participating subscriber groups a group message is emitted to all the other switching centres (KVS).

9. A method as claimed in claim 2, characterised in that a subscriber who leaves his group is characterised as a vagrant in the subscriber list of the respective switching centre (KVS).

10. A method as claimed in claim 9, characterised in that when connected to a switching centre which is not assigned to his group, a vagrant is entered as an accessible vagrant in the subscriber list and his group number is entered in the group list.